(19) **Europäisches Patentamt** / **European Patent Office** / **Office européen des brevets**

(11) **EP 4 599 291 B1**

(12) **EUROPEAN PATENT SPECIFICATION**

(45) Date of publication and mention of the grant of the patent:
**29.07.2026 Bulletin 2026/31**

(21) Application number: **23787057.1**

(22) Date of filing: **06.10.2023**

(51) International Patent Classification (IPC):
*G02C 13/00* *(2006.01)*

(52) Cooperative Patent Classification (CPC):
**G02C 13/005**

(86) International application number:
**PCT/EP2023/077758**

(87) International publication number:
**WO 2024/074698 (11.04.2024 Gazette 2024/15)**

(54) **PROCESS FOR THE DETERMINATION OF AN ESTIMATION OF A FITTING HEIGHT OF A LENS IN A FRAME OF SPECTACLES AND CORRESPONDING APPARATUS**

VERFAHREN ZUR BESTIMMUNG EINER SCHÄTZUNG EINER ANPASSHÖHE EINER LINSE IN EINEM BRILLENGESTELL UND ENTSPRECHENDE VORRICHTUNG

PROCÉDÉ POUR LA DÉTERMINATION D'UNE ESTIMATION D'UNE HAUTEUR DE MONTAGE D'UN VERRE DANS UNE MONTURE DE LUNETTES ET APPAREIL CORRESPONDANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.10.2022 EP 22306516**

(43) Date of publication of application:
**13.08.2025 Bulletin 2025/33**

(73) Proprietor: **Essilor International**
**94220 Charenton-Le-Pont (FR)**

(72) Inventor: **ALLIONE, Pascal**
**94220 CHARENTON-LE-PONT (FR)**

(74) Representative: **Jacobacci & Partners France**
**32, rue de l'Arcade**
**75008 Paris (FR)**

(56) References cited:
WO-A1-2021/122826     US-A1- 2009 066 914
US-A1- 2015 049 306     US-A1- 2020 183 194

## Description

TECHNICAL FIELD OF THE INVENTION

The invention relates to a process for the determination of an estimation of a fitting height of a lens of spectacles. It is also related to an apparatus comprising means for the determination of the fitting height of lenses of spectacles and implementing the process.

It allows the automation of the determination of the fitting height thanks to the use one or more 2D or 3D cameras and, advantageously, without any intervention of an Eye Care Practitioner. The determination can also be done with an intervention of the Eye Care Practitioner thanks to measurements directly done on a wearer of the spectacles, possibly using a measuring apparatus requiring human operation, or indirectly using pictures on which measurements are done by the Eye Care Practitioner.

BACKGROUND INFORMATION AND PRIOR ART

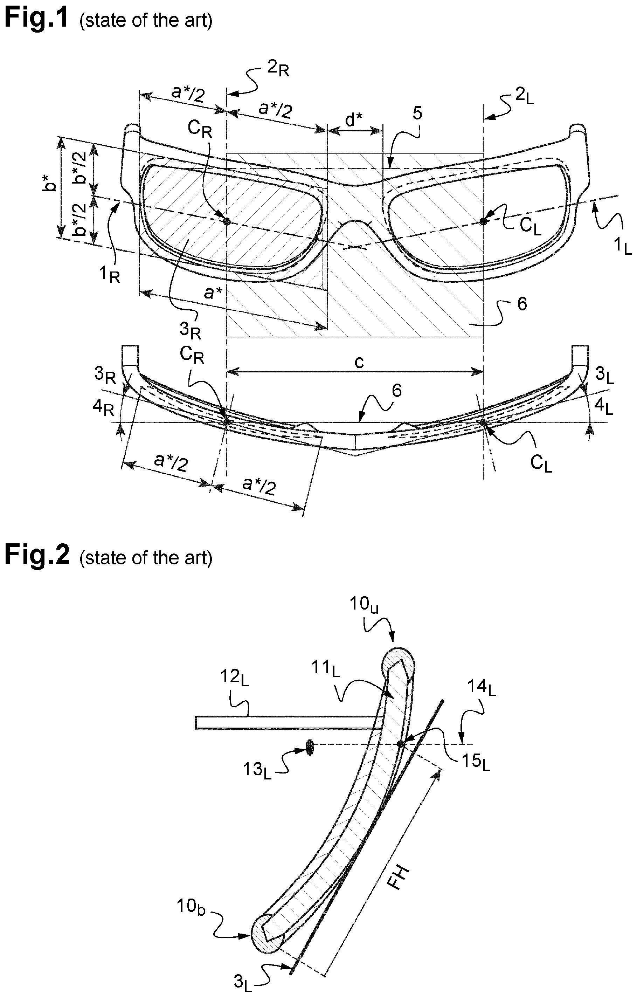

The spectacles and their lenses may be defined with a number of parameters. For example, on figure 1 of the state of the art, parameters are shown in which the indexes R and L are referencing the right lens and the left lens, respectively. Reference "a*" is the horizontal dimension of lens framing, "b*" the vertical dimension of lens framing, "c" the distance between the L and R centres of the boxing systems, "d*" the distance between the lenses, "CR", "CL" the centres of the boxing systems of the right and left lenses respectively, "1R", "1L" the horizontal median right and left lines respectively, "2R", "2L" the vertical median right and left lines respectively, "3R", "3L" a right lens plane and a left lens plane respectively , "4R", "4L" the angles, to the frontal plane, of the lenses planes at the centres CR , CL of the boxing systems for right and left lenses respectively, ,"5" the tangent common to the upper edges of the shapes of the lenses, "6" the frontal plane of the spectacles that passes at the centres CR, CL, of the boxing systems. The directions horizontal and vertical apply because the frame of the spectacle is supposed to be horizontal, i.e. its main frontal axis is horizontal, i.e. the two hinge temples are at the same level, as when the wearer normally wears the spectacles in natural posture.

The boxing system of the lens is defined as an imaginary box around the lens shape with the box's sides tangent to the outer most edges of the lens shape. Therefore, the boxing system of the lens is also defined with the box's vertical and horizontal sides tangent to the outer edges of the lens. The boxing system of the lens has a bottom horizontal side and an upper horizontal side. The bottom horizontal side of the boxing system is passing through the lowest point of the bottom part of the peripheral outer edge of the lens and therefore tangent to the outer edges of the lens at that lowest point. The upper horizontal side of the boxing system is passing through the highest point of the upper part of the peripheral outer edge of the lens and therefore tangent to the outer edges of the lens at that highest point.

The sides of the boxing system are generally used as references for the measurements. In that context we will see that a bottom referential line is generally considered and that bottom referential line is comprised into the bottom horizontal side of the boxing system of the lens (i.e. the bottom referential line is on the plane or passing on the plane). In the present invention, the word "comprised" means that the line may be limited in length to the size/length of the side of the boxing system but also that the line may extend outside the size/length of the side of the boxing system, in all cases the side of the boxing system carries the line, and this applies for both upper and bottom referential lines and sides of the boxing system. This also implies that the bottom referential line is horizontal.

The determination of the fitting heights of lenses in spectacles is particularly important for the optical comfort of the wearer of complex lenses like progressive lenses.

Figure 2 of the state of the art shows a lateral view of a section of spectacles. On that figure 2, one can see an upper rim part 10u of the frame and a bottom rim part 10b of the frame, those two rim parts pertaining to a left rim encircling the left lens $11_L$. A left temple $12_L$ is seen in the background.

The pupil $13_L$ of the left eye is schematized as a large dot and the horizontal gazing axis $14_L$ of a wearer of the spectacles in natural posture is schematized as a dashed line, the wearer seeing an object situated far ahead/at infinity, the eye being oriented straight ahead. The horizontal gazing axis $14_L$ crosses the front face of the left lens $11_L$ at a defined point that is called mounting point, $15_L$.

In the figure 2, that shows the fitting height, FH, of the left lens $11_L$ and its relation to the lens plane $3_L$ of the left lens, the fitting height, FH, is symbolized as a straight arrow. One can note that the value of the fitting height is the length of the orthogonal projection on the lens plane $3_L$ of a fitting height vector linking the mounting point $15_L$ of the lens and a point of a bottom referential line which is horizontal, the fitting height vector being orthogonal to the bottom referential line. As generally implemented, the bottom referential line is comprised into the bottom horizontal side of the boxing system of the lens and therefore tangential to the bottom part of the peripheral outer edge of the lens at the lowest point of said bottom part.

Following documents refers to processes and means for the fitting of lenses: US 2009/066914 A1, US 2020/183194 A1, WO 2021/122826 A1 and US 2015/049306 A1.

Currently, fitting height measurements can be done manually by the eye care practitioner or can be automated or semi-automated using a 2D or 3D camera and a computer system. In some cases an additional protocol is used to get the value of pantoscopic angle that is the angle between the lens plane $3_L$ and a vertical line. Visioffice® is an example of such an automated camera system.

Some of these known camera systems need an intervention of the eye care practitioner to localize the pupil and/or the boxing system. In particular, the localization of the boxing system is often difficult in the case the spectacles have rimless or partly rimless frames. Some systems also need a complex protocol to estimate the pantoscopic angle in order to correct the height that is measured on a vertical plane in the picture taken by the camera and to give a result corresponding to the definition of the fitting height in which the distance that is considered is a projection on the lens plane $3_L$.

Practically, in these known camera systems, the wearer of the spectacles is positioned in front of the camera. In some implementations, a one-way mirror may hide the camera to the wearer. The camera is connected to a computer that makes all the processing in a plurality of phases.

It is then made, in a recording phase, a record of a picture of the face of the wearer normally wearing the spectacles frame, preferably with two demo lenses, the wearer looking straight ahead to an object situated at a far distance with a horizontal gazing axis, the wearer being in a natural posture, his/her head being vertical, i.e. a frontal section of the auriculo-orbital plane of the head of the wearer defining a horizontal line.

Then, in a centre detection phase, a detection of the centre of the pupils on the picture is done for each eye by the computer. This detection can be done automatically using image processing algorithms and/or with the help of the eye care practitioner pointing manually the centre of the pupils.

Then, in a boxing system detection phase, a detection of the bottom horizontal side of the boxing system is done for the two lenses of the spectacles. This allows to define, for each lens, a bottom referential line that is comprised into the bottom horizontal side of the boxing system of the lens or, usually, to define one common bottom referential line that is common to the two lenses. That common bottom referential line is, in practical, joining tangentially the bottom peripheral outer edges of the two lenses at their respective lowest points. Once again, this task can be done automatically and/or with the help of the eye care practitioner, this last case being preferred when the frame is rimless or has no bottom rim part.

Then, in a calculation phase, calculations of the vertical distances between the centres of the pupils and the bottom referential line(s) are done on the picture.

Such an automated or semi-automated method has some drawbacks because there is no pantoscopic angle correction and the non-paraxial effects due to a wearer not in front of/facing the camera are not taken into account. In addition, the automated detection of the boxing system, in particular the detection of the bottom horizontal side of the boxing system is almost impossible for rimless spectacles. Moreover, in the case there is also a correction for the pantoscopic angle, this is done through additional measurements that add their own inaccuracies/errors to the ones of the previous phases.

It is proposed a process for estimating a fitting height that is much simpler while providing a result that is relatively precise and can be used efficiently with rimless or partly rimless spectacles frames. This last advantage is based on the use of an upper referential point above the mounting point and on a part of the frame that is always present, i.e. the bridge part, or present in frames without bottom part in their rims, i.e. the use of the upper part of the rim. Other advantages of the invention will become apparent from the description of the invention.

## SUMMARY OF THE INVENTION

Therefore one object of the invention is to provide a process for the determination of an estimation of a fitting height of a lens in a frame of spectacles worn by a wearer, the lens being in front of a pupil of an eye of the wearer, the lens having a front face and a peripheral outer edge including a bottom part of the edge, a lens plane of the lens being defined, and when a frontal section of the auriculo-orbital plane of the head of the wearer is defining a horizontal line and the wearer sees through the pupil of the eye an object situated at a far distance with the eye being oriented straight ahead with a horizontal gazing axis passing through the centre of the pupil, then the gazing axis of the eye crosses the front face of the lens at a defined mounting point, the fitting height of the lens being defined as the length of the orthogonal projection on the lens plane of a fitting height vector linking the mounting point of the lens and a point of a bottom referential line which is horizontal and tangential to the bottom part of the peripheral outer edge of the lens at the lowest point of said bottom part, the fitting height vector being perpendicular to the bottom referential line,

> wherein an upper referential point of the frame situated at a level above the mounting point is specified, said referential point allowing to define an upper referential horizontal plane passing on said upper referential point,
> wherein a structural term defined as an algebraic distance between the bottom referential line and the upper referential horizontal plane, is measured,
> wherein a postural term defined as an algebraic distance between the upper referential horizontal plane and the gazing axis, is measured, and
> wherein the fitting height is estimated by summing the value of the postural term and the value of the structural term.

In various embodiments of the invention, the following processing means, which can be used alone or in any technically possible combination, are used:

- the bottom horizontal side of the boxing system is passing through the lowest point of the bottom part of the peripheral outer edge of the lens,
- the bottom referential line which is horizontal and tangential to the bottom part of the peripheral outer edge of the lens, is comprised into the bottom horizontal side of the boxing system of the lens,
- the point on the bottom referential line which is horizontal and tangential to the bottom part of the peripheral outer edge of the lens, is the lowest point of the bottom part of the peripheral outer edge of the lens,
- the structural term FH'struc is the length of the orthogonal projection on the lens plane of a structural vector linking the upper referential point and a point of the bottom referential line, the structural vector being perpendicular to the bottom referential line,
- equivalently, the structural term FH'struc is the length of the orthogonal projection on the lens plane of a structural vector linking the upper referential horizontal plane and a point of the bottom referential line, the structural vector being perpendicular to the bottom referential line,
- the structural term FHstruc is the vertical distance between the upper referential horizontal plane and a point of the bottom referential line,
- the postural term FHpos is the vertical distance between the upper referential horizontal plane and the gazing axis,
- the lens plane is inclined compared to the vertical with a pantoscopic angle P and wherein the vertical distance is further corrected for the pantoscopic angle in order to provide a corrected postural term, the corrected postural term being the result of $\frac{vertical\ distance}{\cos(\hat{P})}$ , and the fitting height is estimated by summing the value of the corrected postural term and the value of the structural term, both terms being algebraic distances,
- the bottom edge of the lens is fitted in a bottom part of the frame,
- the upper edge of the lens is fitted in an upper part of the frame,
- the wearer is wearing the frame in a natural posture in which a frontal section of the auriculo-orbital plane of the head of the wearer is defining a horizontal line, in order that the pupils are level and therefore in a same horizontal plane, the spectacles comprising two lenses and being worn horizontally, the two defined mounting points of the two lenses being in the same horizontal plane,
- the lens plane is a plane tangent to the lens at the centre of the boxing system of the lens, the centre of the boxing system being at the middle of the horizontal dimension of the boxing system and at the middle of the vertical dimension of the boxing system,
- the structural term is obtained from a construction plan of the frame and is provided as a data attached to the frames produced according to the plan,
- the structural term is measured once at the factory producing the frame and is provided as a data attached to the frame,
- the structural term is measured once at the factory producing the frame on one frame of a batch of same frames and is provided as a data attached to each of the frames of the batch,
- the structural term is measured when at least one lens has to be prepared for new spectacles or modified or changed for updated spectacles,
- the data attached to the frame is a material information, e.g. value printed on paper or on the frame,
- the data attached to the frame is an immaterial information, e.g. a value stored in an electronic memory and/or in a computerized system,
- the data attached to the frame is an immaterial information, e.g. a value transmitted over a computer network,
- the upper referential point is selected from:

  - a point of a bottom edge of a bridge of the frame,
  - the highest point of a bottom edge of a bridge of the frame,
  - a point of an upper edge of a bridge of the frame,
  - the highest point of an upper edge of a bridge of the frame,
  - a point of an upper part of the frame that receives and accommodates the upper edge of the lens,
  - a point of a bottom edge of an upper part of the frame that receives and accommodates the upper edge of the lens,
  - the highest point of a bottom edge of an upper part of the frame that receives and accommodates the upper edge of the lens,
  - a point of an upper edge of an upper part of the frame that receives and accommodates the upper edge of the lens,
  - the highest point of an upper edge of an upper part of the frame that receives and accommodates the upper edge of the lens,
  - a point on an upper referential horizontal line or plane which is horizontal and tangential to an upper part of the peripheral outer edge of the lens,

- the upper horizontal side of the boxing system is passing through the highest point of the upper part of the peripheral outer edge of the lens,
- the upper referential horizontal line which is horizontal and tangential to an upper part of the peripheral outer edge of the lens, is comprised into the upper horizontal side of the boxing system of the lens
- the point on the upper referential horizontal line which is horizontal and tangential to an upper part of the peripheral outer edge of the lens, is the highest point of the upper part of the peripheral outer edge of the lens,

- when considering the two lenses of the spectacles, each of the referential points that are on the upper part of the frame are at a same respective level, in the referential horizontal plane,
- the bridge of the frame is intended to be arranged around the upper part of the nose of the wearer,
- the structural term is measured once on the frame with or without the lenses fitted and is provided as a data attached to the frame and preferably, also attached to other identical frames,
- the structural term is measured by a computerized apparatus using a picture or pictures taken by a 2D or 3D camera,
- the postural term is measured manually,
- the postural term is measured by a computerized apparatus using a picture or pictures taken by a 2D or 3D camera,
- the picture(s) obtained with the computerized apparatus are sensibly in a vertical plane and facing the spectacles,
- the computerized apparatus and the 2D or 3D camera are located at a same location,
- the computerized apparatus and the 2D or 3D camera are not located in a same location and are elements in a network, notably INTERNET, the picture(s) being taken remotely from the computerized apparatus,
- the computerized apparatus is a smartphone,
- the computerized apparatus is a computer connected to a 2D or 3D camera,
- the computerized apparatus is an apparatus comprising computation circuits, a 2D or 3D camera, and a man-machine interface,
- the computerized apparatus is programmable with a program,
- the computerized apparatus using picture(s) is configured to reject the picture(s) taken by the 2D or 3D camera when the obtained picture(s) is/are not in a vertical plane and facing the spectacles,
- the computerized apparatus using picture(s) is configured to reject the picture(s) taken by the 2D or 3D camera when in the obtained picture(s): no face of a wearer is detectable and/or no frame is detectable on the face of the wearer and/or a face detection error due to a bad position of the wearer is produced and/or a frame detection error due to reflections on lenses or shadows is produced and/or a detection of a wearer too close or too far to the camera is produced and/or a detection of a frame not correctly worn is produced and/or no pupil is detected notably due to a blinking of an eye,
- the computerized apparatus using picture(s) is configured to correct the picture(s) taken by the 2D or 3D camera when the obtained picture(s) is/are not in a vertical plane and facing the spectacles,
- the picture(s) are corrected by the computerized apparatus using mathematic and image processing,

- the tilting of the head of the wearer in the picture(s) are corrected by the detection of a tangent line of the boxing system of a lens and then the calculations take into account said tangent line,
- the head orientation is detected using face landmarks that are detected by machine learning technics,
- the computerized apparatus using picture(s) is configured to reject the picture(s) taken by the 2D or 3D camera(s) when the wearer wearing the frame is not in a natural posture or when the head of the wearer is not vertical, and/or when the spectacles is not worn horizontally, and/or when the wearer is not seeing an object situated far ahead/at infinity, and/or when the eyes are not oriented straight ahead with a horizontal gazing axis,
- the computerized apparatus using picture(s) is configured to correct the picture(s) taken by the 2D or 3D camera(s) when the wearer wearing the frame is not in a natural posture and/or when the head of the wearer is not vertical, and/or when the spectacles is not worn horizontally, and/or when the wearer is not seeing an object situated far ahead/at infinity,
- the computerized apparatus is configured to correct the computations, i.e. calculus, when the wearer wearing the frame is not in a natural posture and/or when the head of the wearer is not vertical, and/or when the spectacles are not worn horizontally, and/or when the wearer is not seeing an object situated far ahead/at infinity,
- the computerized apparatus detects on at least one picture of the wearer the upper referential point or the upper referential horizontal plane and the centre of the pupil for at least one of the two eyes and computes, i.e. calculates, the postural term and then estimates the fitting height by summing the value of the postural term and the value of the structural term, both terms being algebraic distances,
- the computerized apparatus iteratively detects on a set of pictures of the wearer the centre of the pupils and the upper referential point and then compute a postural term at each iteration,
- the computerized apparatus iteratively detects on each picture of a set of pictures the upper referential point or the upper referential horizontal plane and the centre of the pupil for at least one of the two eyes and then compute a set of postural terms, and wherein a statistical computation is applied to the set of postural terms in which an upper confidence limit and a lower confidence limit consisting of two values of postural distances are computed, i.e. calculated, the postural terms having values greater than the upper confidence limit and the postural terms having values less than the lower confidence limit are deleted and the remaining postural terms are averaged and wherein the fitting height is estimated by summing the value of the averaged postural terms and the value of the structural term, both terms being algebraic distances,
- before the picture is/are taken, the wearer wearing the frame is instructed to be in a natural posture in which a frontal section of the auriculo-orbital plane of the head of the wearer is defining a horizontal line and instructed to normally wear the spectacles,
- The wearer is instructed to wear horizontally the spectacles,
- the estimation of the fitting height is done for each of the two eyes of the wearer.

A further object of the invention is to provide an apparatus for the determination of an estimation of a fitting height of a lens in a frame of spectacles worn by a wearer, wherein it comprises a computer and a camera connected to the computer and wherein the camera and computer are configured for the execution of the process of the invention.

The present invention will now be exemplified, without being limited thereby, by the following description of embodiments and implementations in relation with:

Figure 1, of the state of the art, which shows parameters defining characteristics of a spectacles frame and its lenses,

Figure 2, of the state of the art, which shows a lateral view in section of spectacles in relation to the pupils of the eyes of a wearer and the way the mounting point and the fitting height are usually defined, the wearer normally wearing the spectacles and being in a natural posture and looking straight ahead to an object situated far ahead,

Figure 3, which shows a frontal view of a spectacles frame with lenses in relation to the eyes of a wearer and the distances that are measured in an implementation of the invention, the wearer normally wearing the spectacles and being in a natural posture and looking straight ahead to an object situated far ahead,

Figure 4, which shows a lateral view in section of the spectacles of figure 3, and the other distances that are measured in another implementation of the invention,

Figure 5, which shows a flowchart of an example of procedural implementation of the invention,

Figure 6, which shows a frontal view of a spectacles frame with lenses with some examples of upper referential points.

In the concerned figures, the fitting height, FH, is symbolized as a straight arrow. The structural term FH'struc resulting from a projection on the lens plane of the structural vector is symbolized as a straight arrow. The approximate fitting height FHapprox that is vertical is symbolized as a straight arrow. The structural term FHstruc that is vertical and results from a projection on a vertical plane of the structural vector is symbolized as a straight arrow. The postural term FHpos that is vertical and results from a projection on a vertical plane of the postural vector is symbolized as a straight arrow.

## DETAILED DESCRIPTION OF EXAMPLE(S)

The principle of the invention is based on the decomposition of the fitting height in two terms: a structural term and a postural term.

The structural term is a distance that can be precisely measured and advantageously only once, preferably at the factory manufacturing the frames. The structural term is only dependent of the spectacles frame. Indeed, the structural term depends only on the geometry/structure of the frame and is not depending on the way the frame is worn. There is no need that the (future) wearer of the frame of the spectacles to be present for the measurement of the structural term. Advantageously, the acquisition of the structural term, notably with a measurement, can be done by the manufacturer of the spectacles frames and it can, for example, be stored in a database for later use or engraved on the frame. In some instances, the measurement of the structural term can be done by the eye care practitioner in shop, for example when he receives the frame and using a similar device to the DiTest® one.

The postural term needs to be measured with a man-made measurement or fully or partly automated measurement, on the wearer of the spectacles frame wearing the spectacles frame, the spectacles frame being without or preferably with demo lenses. Indeed, the postural term is depending on the way the frame is normally worn in natural posture in a far vision task. The postural term can be advantageously measured with a computerized apparatus and using a simple 2D camera or using a 3D camera for more precise measurements. The computerized apparatus is analysing the obtained frontal pictures of the face of the wearer wearing the spectacles frame, a frontal section of his/her auriculo-orbital plane defining a horizontal line, the wearer being in a natural posture and looking straight ahead to an object situated far ahead.

The postural term is a distance that is shorter than the structural term.

The structural term is added to the postural term to give an estimation of the fitting height, said addition giving a resulting value that is less than the value of the structural term thanks to the consideration of structural and postural vectors pointing in opposite directions and to the consideration of algebraic distance related to the vectors.

The fact that the postural term is much smaller than the structural term and that the structural term can be precisely obtained/measured, gives the advantage that the effect of an error on the postural term has a reduced effect on the fitting height precision. Moreover, we will see that it is possible to determine an estimate that corresponds practically to the definition of the fitting height with a correction of the postural term for the pantoscopic angle.

More generally, the postural term can be seen as a corrective term allowing to avoid measurement difficulties meet with rimless or nylor® frames or minimizing or suppressing pantoscopic measurement error effects or non-paraxial effects using 2D camera in known camera systems. Moreover, the use of the structural term that can be obtained precisely, independently of a wearer, avoid the necessity to find the 3D position of the bottom horizontal side of the boxing system that is particularly difficult to precisely detect with regular 2D or 3D camera in known camera systems.

For rimless or nylor® frames, the structural term that is provided is according to the demo lens used in the shop by the eye care professional (ECP) and if the eye care professional finally wants to order another type of lens than the demo lens, he has to provide the difference between the values b*/2 (i.e. from the vertical dimension of lens framing, see fig. 1) of the demo lens and of the lens he has finally chosen.

The referential point used for the measurement of the postural and structural terms is not at a level (i.e. height) under the level of the pupils but at a level above the level of the pupils and that is why it is called the upper referential point. The upper referential point of the invention can be situated on the frame of the spectacles or can be a point on the upper horizontal side of the boxing system or a point on an upper referential horizontal line that is comprised into the upper horizontal side of the boxing system. Therefore, in the case the frame is totally or partly rimless, i.e. there is no upper rim part in the frame, the use of an upper referential point on the upper edge of the lens and, preferably, on the upper horizontal side of boxing system, is possible if the upper referential point is not chosen on the bridge part of the frame that is always present.

As the purpose of the invention is to estimate the fitting height, it is used a same bottom reference line as the one of the definition of the fitting height. This bottom reference line allows the determination of the structural term as we will see, i.e. it determines the bottom end of the structural vector.

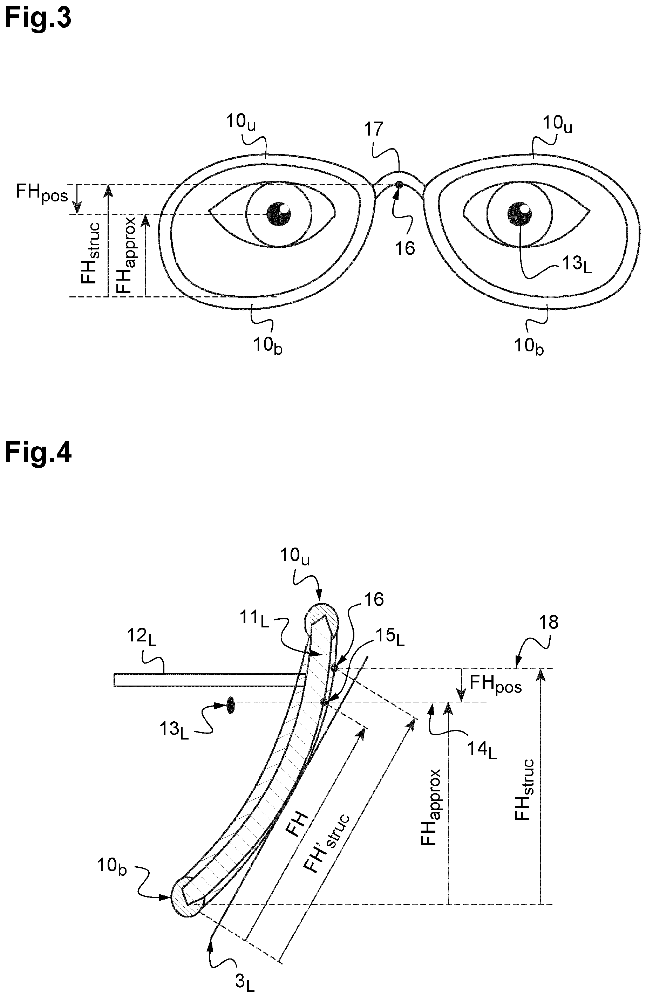

Preferably, the upper referential point 16 used for the measurement of the postural and structural terms is the highest point of the bottom edge of the bridge 17, as it is shown in figures 3 and 4. The bridge 17 is the part of the frame arranged around the nose of the wearer.

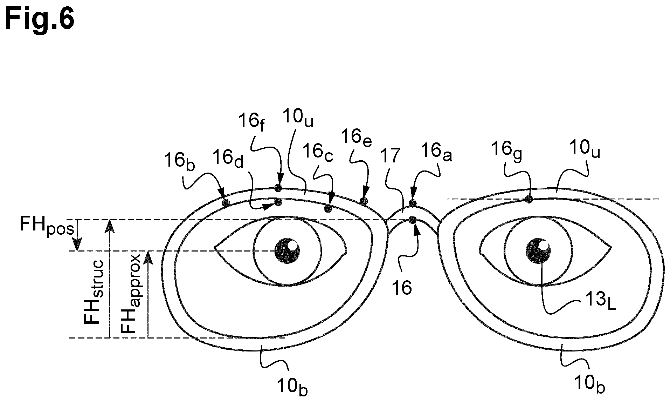

Figure 6 shows, as examples, other upper referential points that could be used:

- the highest point 16 of a bottom edge of the bridge 17 of the frame,
- the highest point 16a of the upper edge of the bridge 17 of the frame,
- a point 16b of the upper part 10u of the frame,
- a point 16c of the bottom edge of the upper part 10u of the frame,
- the highest point 16d of the bottom edge of the upper part 10u of the frame,
- a point 16e of the upper edge of the upper part 10u of the frame,
- the highest point 16f of the upper edge of the upper part 10u of the frame,
- a point 16g on an upper referential horizontal line or plane which is horizontal and tangential to an upper part of the peripheral outer edge of the lens.

For the measurement of the postural term, the mounting point $15_L$ is also used. For the measurement of the structural term, the bottom reference line is also used as it is done for measuring the fitting height in known camera systems.

The upper referential point 16 and the bottom reference line allow to define a structural vector that is orthogonal to the bottom reference line. The structural vector that is considered is extending between, at its lower end, a point on the bottom referential line and, at its upper end, the upper referential point 16, the structural vector being orthogonal to the bottom referential line, said bottom referential line being horizontal. Therefore, the structural vector is contained in a vertical plane. The structural vector is pointing toward the top.

Practically, the bottom reference line is comprised into the bottom horizontal side of the boxing system. More generally, the lower ends of the fitting height (or another name in the case the bottom referential line is modified) vector and of the structural vector may be defined on a bottom referential line that is modified and is not referenced to the boxing system, e.g. a bottom referential line passing to a specific point of the bottom part of the rim of the frame. In all cases, the lower ends of the fitting height vector and of the structural vector must be defined in the same way, i.e. on the same bottom referential line.

The mounting point $15_L$ and the upper referential point 16 allow to define a postural vector. The postural vector that is considered is extending between, at its lower end, a point at the level of the mounting point $15_L$, and at its upper end, a point at the level of the upper referential point 16, both points being such that the postural vector is contained in a vertical plane. One or the two ends of the postural vector may be also defined by one or two horizontal lines and/or planes passing through the mounting point $15_L$ and the upper referential point 16 respectively. The postural vector is pointing toward the bottom.

Figure 3 correspond schematically to a 2D picture taken by a 2D camera of the face of the wearer in natural posture and seeing an object situated far ahead/at infinity, the eyes being oriented straight ahead. With a 3D camera, it could be possible to get an addition depth information (i.e. in a direction away from the camera) and to construct, for example, pictures of slices of the 3D scene, in the direction of depth, i.e. frontal slices, or pictures from a different point of view and preferably lateral views to visualize the pantoscopic angle. That the pantoscopic angle can be estimated with a 2D camera in a lateral position to the head of the wearer, therefore with two 2D cameras, one in front of the wearer to get the face of the wearer and the other located in a lateral position, precise results can be obtained without using a 3D camera.

That figure 3 is now used for the description of an embodiment of the invention which is simple because the distances that are considered for the postural and structural terms are in a vertical plane and, therefore they can be directly measured on a 2D picture of the face of the wearer. This simple embodiment of figure 3 produces an approximate fitting height FHapprox that is also in a vertical plane.

In figure 3, the distances FHpos, FHstruc symbolized as straight arrows, are measured in the vertical plane of the picture. The distance FHpos is the postural term and is measured along a vertical between an upper referential horizontal line or plane 18 (figure 4) passing on the upper referential point 16 and a horizontal line or plane passing on the centre of the pupil 13L and that is at the same level as the horizontal gazing axis $14_L$ (figure 4). Indeed, due to the posture and gazing direction on the wearer, the centre of the pupil on the picture corresponds to the mounting point $15_L$.

In this simple embodiment, the distance FHstruc is the structural term and is measured between the bottom referential line and the upper referential point 16 (or an upper referential horizontal line or plane 18 (figure 4) passing on the upper referential point 16), and it is a vertical distance. An estimation of the value of the fitting height FHapprox can be obtained with the computation: FHapprox = FHstruc + FHpos, those two last values being algebraic distances.

In fact, in this simple embodiment of the invention, the structural vector and the postural vector are projected on a vertical plane corresponding in practical to the plane of the picture and the resulting approximate fitting height FHapprox is therefore in the vertical plane.

In this simple embodiment all the terms are directly obtained from a 2D picture and are in a vertical plane without any correction for pantoscopic angle or projection in the lens plane.

We will see that it is possible to obtain a more precise estimation of the fitting height using a more precise structural term that uses a projection of the structural vector on the lens plane and, possibly, also with a correction of the postural term for the pantoscopic angle or a projection of the postural vector in the lens plane.

Indeed, beside the postural term being smaller than the structural term, another advantage of using an upper referential point that is above the level of the pupils is that it is in along a vertical line that is closer to a vertical line passing at the mounting point $15_L$, than is a vertical line crossing the bottom referential line at the lower end of the fitting height vector when viewed in a lateral view such as the one of figure 4. Those different spacing between those vertical lines are in relation notably to the pantoscopic angle and therefore to the inclination of the lens plane. Therefore, the measurements of the distance for the postural term and that are done from a 2D view or picture and where the postural term is simply a vertical distance, are less distorted when considering the definition of the fitting height that is a distance in the lens plane and not in a vertical plane.

Now, in relation to figure 4, in which the lens plane $3_L$ is visible, a more precise embodiment of the invention is described. In that embodiment, a projection of the structural vector on the lens plane is used. Indeed, to get the structural term FH'struc, the structural vector is projected on the lens plane or a plane parallel to the lens plane, notably in the case a measurement is done materially with a rule.

In the more precise embodiment of the invention, the structural vector is projected on the lens plane to get the distance corresponding to the structural term FH'struc. Therefore, the structural term FH'struc is closer to the definition of the fitting height in that they are both in the lens plane. The fitting height that is computed with the addition of the postural term FHpos and the structural term FH'struc: fitting height = FH'struc + FHpos, and the value of fitting height thus obtained is closer to the fitting height FH of the definition.

Incidentally, the structural term FH'struc could be named "angled structural term" to differentiate it to the structural term FHstruc that could be named "vertical structural term".

However, with that more precise embodiment, the postural term FHpos used is still a vertical distance, i.e. the postural vector projected on a vertical plane. It is therefore also possible to improve the precision of the fitting height that is computed with a correction of the postural term for the pantoscopic angle or a projection of the postural vector on the lens plane.

In the operations that are done in the invention, the distances can be determined between points, in particular a point on the bottom referential line and the upper referential point for the structural term, or a point corresponding to the centre of the pupil and the upper referential point for the postural term. Indeed, postural and structural vectors that define the distances that are measured, are each defined by their respective two ends, a lower one, e.g. a point on the bottom referential line, and an upper one, e.g. the upper referential point. This is also the case for the fitting height vector. It should be noted that those vectors have specific directions, the fitting height vector pointing toward the top, the structural vector pointing toward the top, the postural vector pointing toward the bottom.

However, the distances can also be determined between points and horizontal lines or between points and horizontal planes or between horizontal lines and horizontal planes. Non limiting examples of useable horizontal lines are horizontal lines passing on a referential point or a pupil center, the bottom horizontal side of the boxing system, the upper horizontal side of the boxing system. Non limiting examples of useable horizontal planes are horizontal planes passing on a referential point or a pupil center, horizontal planes supporting a referential line or gazing axis (i.e. the line or axis is on the plane). In addition, to considering only one eye at a time, it is also possible to consider the two eyes and/or the two rims and lenses for defining common referential lines and planes, e.g. the horizontal plane passing on the two centers of the two pupils, the horizontal plane passing on the two gazing axis of the two eyes, horizontal plane passing on the two bottom horizontal sides of the two boxing systems of the two lenses. Examples of common horizontal lines, and the corresponding horizontal planes, that are defined in the picture are a horizontal line crossing the two pupil centers or the two gazing axis of the two eyes (for defining the bottom ends of the postural vectors), a horizontal line joining the two bottom horizontal sides of the two boxing systems of the two lenses (for a common bottom referential line or plane), a horizontal line joining the two upper horizontal sides of the two boxing systems of the two lenses (for the a common upper referential horizontal line or plane 18).

Regarding the characteristic "horizontal" for the lines and planes (and respectively vertical lines and planes) this is, firstly, to simplify the description of the invention (notably to help to reference in the space the respective positions and directions of the elements of the invention), and, secondly, this is in relation to the fact that, for the measurements, the spectacles are supposed to be worn normally with the wearer in natural posture in which the frame is horizontal and the two pupil centers are on a horizontal line or plane. More generally, this also means that those lines and planes that are used to measure the distances, i.e. that define the ends of the postural and structural vectors are parallel the one to each other. This correspond to ideal cases that are most generally encountered. However, the invention applies also to cases that deviate from those ideal cases thanks to computations, i.e. calculations, that take into account the deviations from the ideal cases. For example, the fact that the frame is tilted on a side (resulting in that a frontal section of the auriculo-orbital plane is defining a line that is not horizontal) can be taken it into account in the calculation. For example, the fact that the gaze direction is not horizontal can be taken into account thanks to a complementary system that allows to estimate the gaze direction, i.e. eye tracking, and to take it into account in the calculation. The deviations can be taken into account through image processing, for example with a rotation of the image(s) taken.

Therefore, as the camera is configured to provide pictures in which a horizontal line of the scene that is pictured is a horizontal line of pixels in the picture, the distances can be determined between lines defined in the picture and that are horizontal and/or the distances can be determined between planes defined in the picture and that are horizontal (the picture may have been corrected to have the line(s) and/or plane(s) horizontal or the computations take care of the tilt of the line(s) and/or plane(s) ). It can be noted that some image processing may be applied to correct some defaults in the head position and/or in the wearing of the frame, e.g. rotation of the picture for correcting a slight tilting of the head of the wearer.

The detection of the referential points or lines or planes can be done using standard image processing technics, e.g. face localization, face landmark localization, edge detection... or using machine learning algorithm, e.g. convolutional neural networks... to find the frame in the picture. The measurements obtained from the pictures also use known mathematical procedures to be able to convert pixel size of an object on the picture to the true size, in the real world, of the object.

For a rimless frame, the implementation of the invention is much easier than with known systems because the detection of the upper referential point or line or plane is much easier as a point of the bridge part of the frame can be used and that there is no need of a detection of the boxing system because the structural term is obtained beforehand and can be measured precisely once. With known systems, additional device, e.g. IR camera or addiction light system, must be used to be able to detect the boxing system for rimless frames.

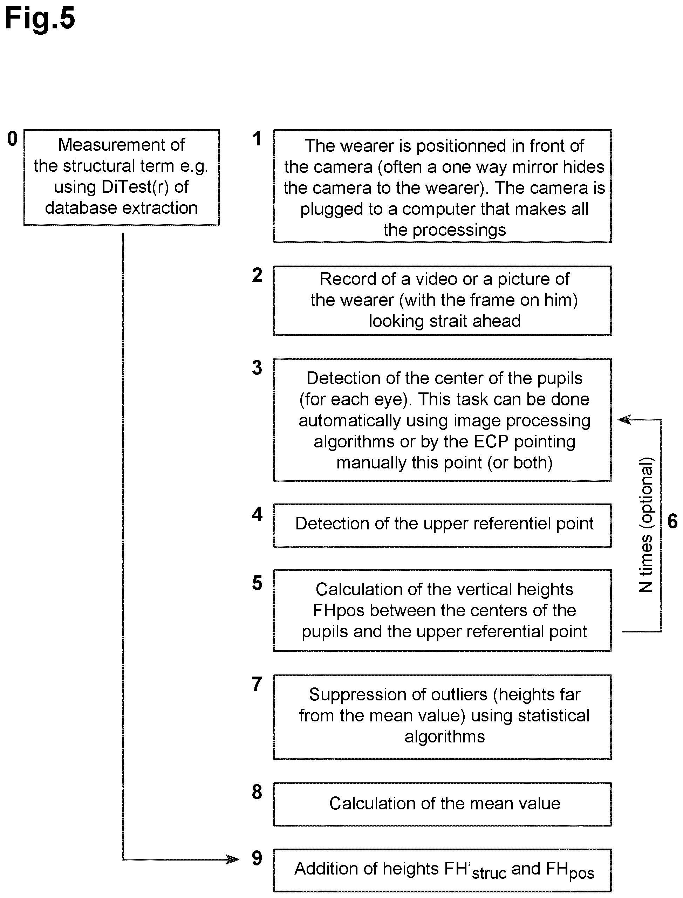

A flowchart of an example of a procedural implementation of the invention is shown in figure 5 in which the numbers 0 to 9 refer to the steps of the operations.

At step 0, a measurement of the structural term is done. In this example, the structural term is obtained from the FH'struc parameter. This measurement can be done once, at the factory manufacturing the spectacle frame, and therefore the structural term is obtained from an information/data provided by the manufacturer, e.g. from a frame data base extraction. When such information/data is not available, it is possible to measure the structural term using a device usually used for that purpose and for example a DiTest® device that provide a result using the lens plane and according to the description provided above for the FH'struc parameter.

At step 1, a wearer is instructed to normally wear the spectacle and to be in a natural posture in which a frontal section of the auriculo-orbital plane of the head of the wearer is defining a horizontal line. He/she is also instructed to look at an object situated at a far distance with the eyes being oriented straight ahead toward an apparatus configured to execute the process according to the invention providing the fitting height for each lens or both lenses according to the case. The apparatus comprises computer means and a camera plugged to it, which is at least a 2D camera. The camera is arranged to get frontal picture(s) of the face of the wearer. The camera may be hidden to the wearer thanks to a one-way mirror.

At step 2, the apparatus records a picture or a video, i.e. a set of pictures. Therefore, the face of the wearer with at least his/her eyes, nose and the spectacles frame are on the picture(s) which is/are 2D representation(s) of the face of the wearer looking straight ahead.

At step 3, the computer means of the apparatus detects in the image(s) the center of each pupil for both eyes using image processing algorithms. In some case, the eye care professional (ECP) may have to intervene by pointing manually to the center(s) of the pupil(s) or just for a verification of the detection and/or for a manual correction of the detection.

At step 4, the computer means of the apparatus detects in the image(s) the upper referential point 16 or the upper referential horizontal plane 18 and that corresponds to an upper referential horizontal line in the 2D image(s).

At step 5, the computer means of the apparatus calculates the postural term from the vertical distance/height between the level of the center of the pupil and the level of the upper referential point for each eye. The steps 3, 4 and 5 are iterated on each image of a set of images and that is why on figure 5 the arrow 6 of an iteration step is represented. In other embodiments, this is the steps 2, 3, 4 and 5 that are iterated. The number of iterations can be a predetermined value N or not. Of course, if the apparatus is configured to operate on one picture, there is no iteration. In an advanced implementation, a quality parameter is attached to each detection and in the case the global quality is low, the number of iterations is increased, and conversely. The difference in the values of the two postural terms of the two eye is an example of such a quality parameter, a high difference is probably due to an error. When the iterations of step 6 are over, the computer means of the apparatus has a set of postural terms FHpos. The postural term is the one from the vertical distance/height or step 5 can further process the calculus with a correction for the pantoscopic angle in the case that angle is known (e.g. manually entered in the computer means or downloaded from a data base) or has been obtained by the apparatus from image(s), notably with 3D camera, and/or with additional means.

At step 7, the computer means of the apparatus processes the set of postural terms FHpos with statistical tools to decrease the uncertainties. In the proposed example, an upper confidence limit and a lower confidence limit consisting of two values of postural distances are calculated from the set of postural terms. The postural terms having values greater than the upper confidence limit and the postural terms having values less than the lower confidence limit are deleted from the set.

At step 8, the computer means of the apparatus averages the remaining postural terms to get a mean value of remaining postural terms.

Finally, at step 9, the fitting height is estimated by the addition of the mean value of the remaining postural terms and the value of the structural term.

In an advanced embodiment, the computer means of the apparatus is configured to detect from the picture abnormalities and to correct them if possible or to reject the picture and use another picture. For example, in step 2, if the face or spectacles cannot be grossly detected in the image, the image is rejected. For example, at step 3, if the centers of the pupils are not at a same level and the difference of levels is too high this could mean that head of the wearer is tilted on a side and a rotation of the image could be tried. For example, at step 4, if in the case two upper referential points on the two upper parts of the two rims are detected and are not at the same level and the difference of levels is too high this could mean that head of the wearer is tilted on a side or the spectacles are not worn correctly and an attempt to correct the image could be tried. For example, at step 4, if the two positional terms of the two lenses are not equal but the difference is small, the average value of the two positional terms could be averaged.

As implementation examples for the detection of abnormalities in the pictures/images, e.g. a frame orientation that is not horizontal or bad head positioning, and/or for determining means/parameters used in the process of the invention, following image processing procedures can be used.

For the frame orientation:

- Face Landmark detection in a picture/image, for example using Convolutional Neural Network, in order to localize eyes zones,
- Detection of the bottoms of each half-frame, typically using edge detection under each eye zones defined by the iris locations,
- Search of a line linking two points of the two bottoms of the frame such that all other points of the frame are above this line, i.e. the "tangent bottom line of the frame",
- In most of the cases this line is horizontal (i.e. the frame is worn normally). If this not the case and the angle of the frame orientation compared to horizontal is less than a determined value then this fact is taken into account in the process in order to get the exact relevant terms through corrections. If said angle is greater than the determined value then the picture/image is discarded and the procedures are repeated with a new picture/image, possibly obtained after repeating instructions given to the wearer.

For the detection of a bad positioning of the head, one can use for example procedures to estimate the "right/left orientation of the head". This can be done according to the following procedures:

- Face Landmark detection in a picture/image, for example using Convolutional Neural Network, in order to localize eyes zones,
- Iris centers detection for the two eyes, for example using Convolutional Neural Network or more traditional algorithm like Daugman Algorithm,
- Calculation of the two horizontal distances between the root of the nose and the two iris centers,
- In most of the cases those the two horizontal distances are equal or the difference lower than a threshold value (i.e. the head is not significantly rotated on a side). If the difference of these two distances in absolute value is bigger than a threshold value, then the picture/image is discarded and the procedures are repeated with a new picture/image, possibly obtained after asking (again) to the wearer to stand really in front the camera.

In addition, the structural term can be checked for coherency especially when it has to be measured by the apparatus or the eye care professional or even input by the eye care professional from external information/-data, e.g. when the input value is too far from regular values then a warning is issued on the man-machine interface of the apparatus.

For the wearer and the eye care professional, the operations to get the fitting height appears very similar to the one with known camera systems that directly measure the fitting height. A difference could be that the eye care professional has to enter or measure the structural term but this would be very rare as that structural term would be generally provided by the manufacturer of the spectacle frame.

The invention can be implemented in many other ways without departing from the scope of the claims. For example, the possibly common upper referential horizontal line or plane 18 can be the line of the top of the lens, which can be deducted from the top of the frame line thanks to image processing. In this case, the structural term would be the B*-size of the frame shown on figure 1, and the postural term would be the distance/height between lines passing at the centre(s) of the pupil(s) and at the top of the upper part of the rim(s) or better, the top of the groove of the upper part of the rim(s) that accommodate(s) the outer edge(s) of the lens(es), the lines being at least parallel or at best horizontal. The advantage of this last case is that the B*-size of the frame is a quantity initially known as already measured and provided by the manufacturer of the frame.

**Claims**

1. Process for the determination of an estimation of a fitting height of a lens ($11_L$) in a frame (10u, 10b, 17) of spectacles worn by a wearer, the lens being in front of a pupil ($13_L$) of an eye of the wearer, the lens having a front face and a peripheral outer edge including a bottom part of the edge, a lens plane ($3_L$) of the lens being defined, and when a frontal section of the auriculo-orbital plane of the head of the wearer is defining a horizontal line and the wearer sees through the pupil ($13_L$) of the eye an object situated at a far distance with the eye being oriented straight ahead with a horizontal gazing axis ($14_L$) passing through the centre of the pupil ($13_L$), then the gazing axis ($14_L$) of the eye crosses the front face of the lens ($11_L$) at a defined mounting point ($15_L$),

the fitting height of the lens being defined as the length of the orthogonal projection on the lens plane ($3_L$) of a fitting height vector linking the mounting point ($15_L$) of the lens and a point of a bottom referential line which is horizontal and tangential to the bottom part of the peripheral outer edge of the lens at the lowest point of said bottom part, the fitting height vector being perpendicular to the bottom referential line,
   **characterized in that** an upper referential point (16) of the frame situated at a level above the mounting point is specified, said referential point allowing to define an upper referential horizontal plane (18) passing on said upper referential point (16), and
   **in that** the process comprises the steps of:

   measuring a structural term (FH'struc, FHstruc) defined as an algebraic distance between the bottom referential line and the upper referential horizontal plane (18), measuring a postural term (FHpos) defined as an algebraic distance between the upper referential horizontal plane (18) and the gazing axis ($14_L$), and estimating the fitting height (FH, FHapprox) by summing the value of the postural term and the value of the structural term.

2. Process according to claim 1, wherein the structural term (FH'struc) is the length of the orthogonal projection on the lens plane ($3_L$) of a structural vector linking the upper referential point (16) and a point of the bottom referential line, the structural vector being perpendicular to the bottom referential line.

3. Process according to claim 1, wherein the structural term (FHstruc) is the vertical distance between the upper referential horizontal plane (18) and a point of the bottom referential line.

4. Process according to any one of claims 1 to 3, wherein the postural term (FHpos) is the vertical distance between the upper referential horizontal plane (18) and the gazing axis ($14_L$).

5. Process according to claim 4, wherein the lens plane ($3_L$) is inclined compared to the vertical with a pantoscopic angle P and wherein the vertical distance is further corrected for the pantoscopic angle in order to provide a corrected postural term, the corrected postural term being the result of $\dfrac{\text{vertical distance}}{\cos(\hat{P})}$, and wherein the process comprises the step of estimating the fitting height by summing the value of the corrected postural term and the value of the structural term, both terms being algebraic distances.

6. Process according to any one of claims 1 to 5, wherein the upper referential point is selected from:

- a point of a bottom edge of a bridge (17) of the frame,
- the highest point (16) of a bottom edge of a bridge (17) of the frame,
- a point of an upper edge of a bridge (17) of the frame,
- the highest point (16a) of an upper edge of a bridge (17) of the frame,
- a point (16b) of an upper part (10u) of the frame that receives and accommodates the upper edge of the lens,
- a point (16c) of a bottom edge of an upper part (10u) of the frame that receives and accommodates the upper edge of the lens,
- the highest point (16d) of a bottom edge of an upper part (10u) of the frame that receives and accommodates the upper edge of the lens,
- a point (16e) of an upper edge of an upper part (10u) of the frame that receives and accommodates the upper edge of the lens,
- the highest point (16f) of an upper edge of an upper part (10u) of the frame that receives and accommodates the upper edge of the lens,
- a point (16g) on an upper referential horizontal line or plane which is horizontal and tangential to an upper part of the peripheral outer edge of the lens.

7. Process according to any one of claims 1 to 6, wherein it comprises the steps of measuring the structural term (FH'struc, FHstruc) once on the frame with or without the lenses fitted and providing the structural term (FH'struc, FHstruc) as a data attached to the frame and preferably, also attached to other identical frames.

8. Process according to any one of claims 1 to 7, wherein it comprises the step of measuring the structural term (FH'struc, FHstruc) by a computerized apparatus using a picture or pictures taken by a 2D or 3D camera.

9. Process according to any one of claims 1 to 8, wherein it comprises the step of measuring the postural term (FHpos) manually.

10. Process according to any one of claims 1 to 8, wherein it comprises the step of measuring the postural term (FHpos) by a computerized apparatus using a picture or pictures taken by a 2D or 3D camera.

11. Process according to claim 10, wherein the computerized apparatus detects on at least one picture of the wearer the upper referential point (16) or the upper referential horizontal plane (18) and the centre of the pupil for at least one of the two eyes and computes the postural term and then estimates the fitting height by summing the value of the postural term and the value of the structural term, both terms being algebraic distances.

12. Process according to claim 10, wherein the computerized apparatus iteratively detects on each picture of a set of pictures the upper referential point (16) or the upper referential horizontal plane (18) and the centre of the pupil for at least one of the two eyes and then compute a set of postural terms, and

wherein a statistical computation is applied to the set of postural terms in which an upper confidence limit and a lower confidence limit consisting of two values of postural distances are computed, the postural terms having values greater than the upper confidence limit and the postural terms having values less than the lower confidence limit are deleted and the remaining postural terms are averaged and
wherein the fitting height is estimated by summing the value of the averaged postural terms and the value of the structural term, both terms being algebraic distances.

13. Process according to any one of claims 10 to 12, wherein before the picture(s) is/are taken, the wearer wearing the frame is instructed to be in a natural posture in which a frontal section of the auriculo-orbital plane of the head of the wearer is defining a horizontal line and instructed to normally wear the spectacles.

14. Process according to any one of claims 1 to 13, wherein the estimation of the fitting height is done for each of the two eyes of the wearer.

15. Process according to any one of claims 1 to 14, wherein the computerized apparatus using picture(s) is configured to correct the picture(s) taken by the 2D or 3D camera(s) and/or to correct the computations, when the wearer wearing the frame is not in a natural posture and/or when the head of the wearer is not vertical, and/or when the spectacles is not worn horizontally, and/or when the wearer is not seeing an object situated far ahead/at infinity.

16. Apparatus for the determination of an estimation of a fitting height of a lens ($11_L$) in a frame (10u, 10b, 17) of spectacles worn by a wearer, wherein it comprises a computer and a camera connected to the computer and wherein the camera and computer are configured for the execution of the process of any one of claims 1 to 15.

**Patentansprüche**

1. Verfahren zur Bestimmung einer Schätzung einer Einschleifhöhe einer Linse ($11_L$) in einer Fassung (10u, 10b, 17) einer durch einen Träger getragenen Brille, wobei sich die Linse vor einer Pupille ($13_L$) eines Auges des Trägers befindet, wobei die Linse eine vordere Fläche und einen peripheren Außenrand einschließlich eines unteren Teil des Randes aufweist, wobei eine Linsenebene ($3_L$) der Linse definiert ist und, wenn ein Frontalschnitt der Auge-Ohr-Ebene des Kopfes des Trägers eine horizontale Linie definiert und der Träger durch die Pupille ($13_L$) des Auges ein Objekt sieht, das sich in einer großen Entfernung befindet, wobei das Auge gerade nach vorne mit einer horizontalen Blickachse ($14_L$) orientiert ist, die durch das Zentrum der Pupille ($13_L$) verläuft, die Blickachse ($14_L$) des Auges die vordere Fläche der Linse ($11_L$) an einem definierten Montagepunkt ($15_L$) kreuzt,

   wobei die Einschleifhöhe der Linse als die Länge der orthogonalen Projektion auf die Linsenebene($3_L$) eines Einschleifhöhenvektors definiert ist, der den Montagepunkt ($15_L$) der Linse und einen Punkt einer unteren Referenzlinie verbindet, die horizontal und tangential zu dem unteren Teil des peripheren Außenrandes der Linse an dem tiefsten Punkt dieses unteren Teils ist, wobei der Einschleifhöhenvektor senkrecht zu der unteren Referenzlinie ist, **dadurch gekennzeichnet, dass** ein oberer Referenzpunkt (16) der Fassung, der sich auf einer Höhe oberhalb des Montagepunkts befindet, spezifiziert ist, wobei der Referenzpunkt es ermöglicht, eine obere Referenzhorizontalebene (18) zu definieren, die durch den oberen Referenzpunkt (16) verläuft, und dass das Verfahren die folgenden Schritte umfasst:

   Messen eines Strukturterms (FH'struc, FHstruc), der als ein algebraischer Abstand zwischen der unteren Referenzlinie und der oberen Referenzhorizontalebene (18) definiert ist,
   Messen eines Haltungsterms (FHpos), der als ein algebraischer Abstand zwischen der oberen Referenzhorizontalebene (18) und der Blickachse ($14_L$) definiert ist, und
   Schätzen der Einschleifhöhe (FH, FHapprox) durch Summieren des Werts des Haltungsterms und des Werts des Strukturterms.

2. Verfahren nach Anspruch 1, wobei der Strukturterm (FH'struc) die Länge der orthogonalen Projektion auf die Linsenebene ($3_L$) eines Strukturvektors ist, der den oberen Referenzpunkt (16) und einen Punkt der unteren Referenzlinie verbindet, wobei der Strukturvektor senkrecht zu der unteren Referenzlinie ist.

3. Verfahren nach Anspruch 1, wobei der Strukturterm (FHstruc) der vertikale Abstand zwischen der oberen Referenzhorizontalebene (18) und einem Punkt der unteren Referenzlinie ist.

4. Verfahren nach einem der Ansprüche 1 bis 3, wobei der Haltungsterm (FHpos) der vertikale Abstand zwischen der oberen Referenzhorizontalebene (18) und der Blickachse ($14_L$) ist.

5. Verfahren nach Anspruch 4, wobei die Linsenebene ($3_L$) im Vergleich zu der Vertikalen um einen pantoskopischen Winkel P geneigt ist und wobei der vertikale Abstand ferner für den pantoskopischen Winkel korrigiert wird, um einen korrigierten Haltungsterm bereitzustellen, wobei der vertikalabstandskorrigierte Haltungsterm das Ergebnis von $\dfrac{vertikaler\ Abstand}{\cos(\hat{P})}$ ist, und wobei der Verfahren den Schritt des Schätzens der Einschleifhöhe durch Summieren des Werts des korrigierten Haltungsterms und des Werts des Strukturterms umfasst, wobei beide Terme algebraische Abstände sind.

6. Verfahren nach einem der Ansprüche 1 bis 5, wobei der obere Referenzpunkt ausgewählt ist aus:

   - ein Punkt eines unteren Randes eines Stegs (17) der Fassung,
   - der höchste Punkt (16) eines unteren Randes eines Stegs (17) der Fassung,
   - ein Punkt eines oberen Randes eines Stegs (17) der Fassung,
   - der höchste Punkt (16a) eines oberen Randes eines Stegs (17) der Fassung,
   - ein Punkt (16b) eines oberen Teils (10u) der Fassung, der den oberen Rand der Linse empfängt und aufnimmt;
   - ein Punkt (16c) eines unteren Teils (10u) der Fassung, der den oberen Rand der Linse empfängt und aufnimmt;
   - der höchste Punkt (16d) eines unteren Randes eines oberen Teils (10u) der Fassung, der den oberen Rand der Linse empfängt und aufnimmt;
   - ein Punkt (16e) eines oberen Randes eines oberen Teils (10u) der Fassung, der den oberen Rand der Linse empfängt und aufnimmt;
   - der höchste Punkt (16f) eines oberen Randes eines oberen Teils (10u) der Fassung, der den oberen Rand der Linse empfängt und aufnimmt;
   - ein Punkt (16g) auf einer oberen Referenzhorizontallinie oder -ebene, die horizontal und tangential zu einem oberen Teil des peripheren Außenrandes der Linse ist.

7. Verfahren nach einem der Ansprüche 1 bis 6, wobei es die Schritte zum Messen des Strukturterms (FH'struc, FHstruc) einmal an der Fassung mit oder ohne eingesetzte Linsen und Bereitstellen des Strukturterms (FH'struc, FHstruc) als Daten umfasst, die der Fassung zugeordnet sind und vorzugsweise auch anderen identischen Fassungen zugeordnet sind.

8. Verfahren nach einem der Ansprüche 1 bis 7, wobei es den Schritt zum Messen des Strukturterms (FH'struc, FHstruc) durch eine computergestützte Einrichtung unter Verwendung eines Bildes oder von Bildern umfasst, das/die durch eine 2D- oder 3D-Kamera aufgenommen wurde(n).

9. Verfahren nach einem der Ansprüche 1 bis 8, wobei es den Schritt zum manuellen Messen des Haltungsterms (FHpos) umfasst.

10. Verfahren nach einem der Ansprüche 1 bis 8, wobei es den Schritt zum Messen des Haltungsterms (FHpos) durch eine computergestützte Einrichtung unter Verwendung eines Bildes oder von Bildern umfasst, das/die durch eine 2D- oder 3D-Kamera aufgenommen wurde(n).

11. Verfahren nach Anspruch 10, wobei die computergestützte Einrichtung, in wenigstens einem Bild des Trägers, den oberen Referenzpunkt (16) oder die obere Referenzhorizontalebene (18) und das Zentrum der Pupille für wenigstens eines der beiden Augen detektiert und den Haltungsterm berechnet und dann die Einschleifhöhe schätzt, indem der Wert des Haltungsterms und der Wert des Strukturterms summiert werden, wobei beide Terme algebraische Abstände sind.

12. Verfahren nach Anspruch 10, wobei die computergestützte Einrichtung iterativ, in jedem Bild eines Satzes von Bildern, den oberen Referenzpunkt (16) oder die obere Referenzhorizontalebene (18) und das Zentrum der Pupille für wenigstens eines der beiden Augen detektiert und dann einen Satz von Haltungstermen berechnet, und

wobei eine statistische Berechnung auf den Satz von Haltungstermen angewandt wird, wobei eine obere Konfidenzgrenze und eine untere Konfidenzgrenze, die aus zwei Werten von Haltungsabständen bestehen, berechnet werden, wobei die Haltungsterme mit Werten, die größer als die obere Konfidenzgrenze sind, und die Haltungsterme mit Werten, die kleiner als die untere Konfidenzgrenze sind, gelöscht werden und die verbleibenden Haltungsterme gemittelt werden, und
wobei die Einschleifhöhe durch Summieren des Werts der gemittelten Haltungsterme und des Werts des Strukturterms geschätzt wird, wobei beide Terme algebraische Abstände sind.

13. Verfahren nach einem der Ansprüche 10 bis 12, wobei, bevor das/die Bild(er) aufgenommen wird/werden, der Träger, der die Fassung trägt, angewiesen wird, sich in einer natürlichen Haltung zu befinden, in der ein Frontalschnitt der Auge-Ohr-Ebene des Kopfes des Trägers eine horizontale Linie definiert, und angewiesen wird, die Brille normal zu tragen.

14. Verfahren nach einem der Ansprüche 1 bis 13, wobei die Schätzung der Einschleifhöhe für jedes der beiden Augen des Trägers erfolgt.

15. Verfahren nach einem der Ansprüche 1 bis 14, wobei die computergestützte Einrichtung unter Verwendung von (einem) Bild(ern) dazu konfiguriert ist, das/die Bild(er), das/die durch die 2D- oder 3D-Kamera(s) aufgenommen wurde(n), zu korrigieren und/oder die Berechnungen zu korrigieren, wenn sich der Träger, der die Fassung trägt, nicht in einer natürlichen Haltung befindet und/oder wenn der Kopf des Trägers nicht vertikal ist, und/oder wenn die Brille nicht horizontal getragen wird, und/oder wenn der Träger ein Objekt nicht sieht, das sich weit entfernt/im Unendlichen befindet.

16. Einrichtung zur Bestimmung einer Schätzung einer Einschleifhöhe einer Linse (11$_L$) in einer Fassung (10u, 10b, 17) einer durch einen Träger getragenen Brille, wobei sie einen Computer und eine mit dem Computer verbundene Kamera umfasst und wobei die Kamera und der Computer zur Ausführung des Prozesses nach einem der Ansprüche 1 bis 15 konfiguriert sind.

**Revendications**

1. Procédé pour la détermination d'une estimation d'une hauteur d'ajustage d'un verre (11$_L$) dans une monture (10u, 10b, 17) de lunettes portées par une personne porteuse, le verre étant devant une pupille (13$_L$) d'un œil de la personne porteuse, le verre ayant une face avant et un bord extérieur périphérique incluant une partie basse du bord, un plan de verre (3$_L$) du verre étant défini, et, lorsqu'une section frontale du plan auriculo-orbital de la tête de la personne porteuse définit une ligne horizontale et la personne porteuse voit, à travers la pupille (13$_L$) de l'oeil, un objet situé à une distance éloignée, avec l'œil orienté droit devant avec un axe de regard horizontal (14$_L$) passant à travers le centre de la pupille ($13_L$), alors l'axe de regard ($14_L$) de l'œil croise la face avant du verre ($11_L$) à un point de montage défini ($15_L$),

la hauteur d'ajustage du verre étant définie comme étant la longueur de la projection orthogonale sur le plan de verre ($3_L$) d'un vecteur de hauteur d'ajustage reliant le point de montage ($15_L$) du verre et un point d'une ligne référentielle basse qui est horizontale et tangentielle à la partie basse du bord extérieur périphérique du verre au point le plus inférieur de ladite partie basse, le vecteur de hauteur d'ajustage étant perpendiculaire à la ligne référentielle basse, **caractérisé en ce qu'**un point référentiel supérieur (16) de la monture situé à un niveau au-dessus du point de montage est spécifié, ledit point référentiel permettant de définir un plan horizontal référentiel supérieur (18) passant sur ledit point référentiel supérieur (16), et **en ce que** le procédé comprend les étapes de :

la mesure d'un terme structural (FH'struc, FHstruc) défini comme étant une distance algébrique entre la ligne référentielle basse et le plan horizontal référentiel supérieur (18),

la mesure d'un terme postural (FHpos) défini comme étant une distance algébrique entre le plan horizontal référentiel supérieur (18) et l'axe de regard ($14_L$), et l'estimation de la hauteur d'ajustage (FH, FHapprox) en sommant la valeur du terme postural et la valeur du terme structural.

**2.** Procédé selon la revendication 1, dans lequel le terme structural (FH'struc) est la longueur de la projection orthogonale sur le plan de verre ($3_L$) d'un vecteur structural reliant le point référentiel supérieur (16) et un point de la ligne référentielle basse, le vecteur structural étant perpendiculaire à la ligne référentielle basse.

**3.** Procédé selon la revendication 1, dans lequel le terme structural (FHstruc) est la distance verticale entre le plan horizontal référentiel supérieur (18) et un point de la ligne référentielle basse.

**4.** Procédé selon l'une quelconque des revendications 1 à 3, dans lequel le terme postural (FHpos) est la distance verticale entre le plan horizontal référentiel supérieur (18) et l'axe de regard ($14_L$).

**5.** Procédé selon la revendication 4, dans lequel le plan de verre ($3_L$) est incliné par comparaison à la verticale avec un angle pantoscopique P et dans lequel la distance verticale est corrigée davantage en ce qui concerne l'angle pantoscopique afin de fournir un terme postural corrigé, le terme postural corrigé de distance verticale étant le résultat de $\dfrac{\text{distance verticale}}{\cos(\hat{P})}$, et dans lequel le procédé comprend l'étape de l'estimation de la hauteur d'ajustage en sommant la valeur du terme postural corrigé et la valeur du terme structural, les deux termes étant des distances algébriques.

**6.** Procédé selon l'une quelconque des revendications 1 à 5, dans lequel le point référentiel supérieur est sélectionné parmi :

- un point d'un bord bas d'un pont (17) de la monture,
- le point le plus haut (16) d'un bord bas d'un pont (17) de la monture,
- un point d'un bord supérieur d'un pont (17) de la monture,
- le point le plus haut (16a) d'un bord supérieur d'un pont (17) de la monture,
- un point (16b) d'une partie supérieure (10u) de la monture qui reçoit et loge le bord supérieur du verre,
- un point (16c) d'un bord bas d'une partie supérieure (10u) de la monture qui reçoit et loge le bord supérieur du verre,
- le point le plus haut (16d) d'un bord bas d'une partie supérieure (10u) de la monture qui reçoit et loge le bord supérieur du verre,
- un point (16e) d'un bord supérieur d'une partie supérieure (10u) de la monture qui reçoit et loge le bord supérieur du verre,
- le point le plus haut (16f) d'un bord supérieur d'une partie supérieure (10u) de la monture qui reçoit et loge le bord supérieur du verre,
- un point (16g) sur une ligne ou un plan horizontal(e) référentiel (le) supérieur(e) qui est horizontal(e) et tangentiel(le) à une partie supérieure du bord extérieur périphérique du verre.

**7.** Procédé selon l'une quelconque des revendications 1 à 6, dans lequel il comprend les étapes de la mesure du terme structural (FH'struc, FHstruc) une fois sur la monture avec ou sans les verres ajustés et de la fourniture du terme structural (FH'struc, FHstruc) sous forme de données liées à la monture et, de préférence, également liées à d'autres montures identiques.

**8.** Procédé selon l'une quelconque des revendications 1 à 7, dans lequel il comprend l'étape de la mesure du terme structural (FH'struc, FHstruc) par un appareil informatisé en utilisant une image ou des images prise(s) par une caméra 2D ou 3D.

**9.** Procédé selon l'une quelconque des revendications 1 à 8, dans lequel il comprend l'étape de la mesure manuelle du terme postural (FHpos).

10. Procédé selon l'une quelconque des revendications 1 à 8, dans lequel il comprend l'étape de la mesure du terme postural (FHpos) par un appareil informatisé en utilisant une image ou des images prise(s) par une caméra 2D ou 3D.

11. Procédé selon la revendication 10, dans lequel l'appareil informatisé détecte, sur au moins une image de la personne porteuse, le point référentiel supérieur (16) ou le plan horizontal référentiel supérieur (18) et le centre de la pupille pour au moins un des deux yeux et calcule le terme postural et alors estime la hauteur d'ajustage en sommant la valeur du terme postural et la valeur du terme structural, les deux termes étant des distances algébriques.

12. Procédé selon la revendication 10, dans lequel l'appareil informatisé détecte de façon itérative, sur chaque image d'un ensemble d'images, le point référentiel supérieur (16) ou le plan horizontal référentiel supérieur (18) et le centre de la pupille pour au moins un des deux yeux et alors calcule un ensemble de termes posturaux, et
dans lequel un calcul statistique est appliqué à l'ensemble de termes posturaux, dans lequel une limite de confiance supérieure et une limite de confiance inférieure constituées de deux valeurs de distances posturales sont calculées, les termes posturaux ayant des valeurs supérieures à la limite de confiance supérieure et les termes posturaux ayant des valeurs inférieures à la limite de confiance inférieure sont supprimés et une moyenne des termes posturaux restants est effectuée, et dans lequel la hauteur d'ajustage est estimée en sommant la valeur des termes posturaux dont une moyenne est effectuée et la valeur du terme structural, les deux types de termes étant des distances algébriques.

13. Procédé selon l'une quelconque des revendications 10 à 12, dans lequel, avant que l'image ou les images ne soit/soient prise(s), l'instruction est donnée à la personne porteuse portant la monture d'être dans une posture naturelle dans laquelle une section frontale du plan auriculo-orbital de la tête de la personne porteuse définit une ligne horizontale et l'instruction lui est donnée de porter les lunettes normalement.

14. Procédé selon l'une quelconque des revendications 1 à 13, dans lequel l'estimation de la hauteur d'ajustage est effectuée pour chacun des deux yeux de la personne porteuse.

15. Procédé selon l'une quelconque des revendications 1 à 14, dans lequel l'appareil informatisé utilisant une ou des image(s) est configuré pour corriger l'image ou les images prise(s) par la caméra 2D ou 3D(s) et/ou pour corriger les calculs, lorsque la personne porteuse portant la monture n'est pas dans une posture naturelle et/ou lorsque la tête de la personne porteuse n'est pas verticale, et/ou lorsque les lunettes ne sont pas portées horizontalement, et/ou lorsque la personne porteuse ne voit pas un objet situé loin devant/à l'infinité.

16. Appareil pour la détermination d'une estimation d'une hauteur d'ajustage d'un verre ($11_L$) dans une monture (10u, 10b, 17) de lunettes portées par une personne porteuse, dans lequel il comprend un ordinateur et une caméra connectée à l'ordinateur et dans lequel la caméra et l'ordinateur sont configurés pour l'exécution du procédé de l'une quelconque des revendications 1 à 15.

# Fig.1 (state of the art)

# Fig.2 (state of the art)

# Fig.3

# Fig.4

# Fig.5

**0** Measurement of the structural term e.g. using DiTest(r) of database extraction

**1** The wearer is positionned in front of the camera (often a one way mirror hides the camera to the wearer). The camera is plugged to a computer that makes all the processings

**2** Record of a video or a picture of the wearer (with the frame on him) looking strait ahead

**3** Detection of the center of the pupils (for each eye). This task can be done automatically using image processing algorithms or by the ECP pointing manually this point (or both)

**4** Detection of the upper referentiel point

**6** N times (optional)

**5** Calculation of the vertical heights FHpos between the centers of the pupils and the upper referential point

**7** Suppression of outliers (heights far from the mean value) using statistical algorithms

**8** Calculation of the mean value

**9** Addition of heights $FH'_{struc}$ and $FH_{pos}$

# Fig.6

## REFERENCES CITED IN THE DESCRIPTION

**Patent documents cited in the description**

- US 2009066914 A1
- US 2020183194 A1
- WO 2021122826 A1
- US 2015049306 A1